Europäisches Patentamt

European Patent Office

Office européen des brevets

(11) Publication number: **0 452 973 A2**

# EUROPEAN PATENT APPLICATION

(21) Application number: 91106372.5

(22) Date of filing: **19.04.91**

(51) Int. Cl.5: **G02B 6/10**

(30) Priority: **20.04.90 US 512248**

(43) Date of publication of application:
**23.10.91 Bulletin 91/43**

(84) Designated Contracting States:
**BE CH DE DK ES FR GB IT LI NL SE**

(71) Applicant: **E.I. DU PONT DE NEMOURS AND COMPANY**
**1007 Market Street**
**Wilmington Delaware 19898(US)**

(72) Inventor: **Booth, Bruce Lee**
**R.D. 4, Warpath Road**
**West Chester, Pennsylvania 19382(US)**

(74) Representative: **Abitz, Walter, Dr.-Ing. et al**
**Abitz, Morf, Gritschneder, Freiherr von**
**Wittgenstein Postfach 86 01 09**
**W-8000 München 86(DE)**

(54) **Moisture sealing of optical waveguide devices with doped silicon dioxide having a silicon monoxide undercoat.**

(57) Optical waveguide devices which have improved barrier properties after having been coated sequentially with silicon monoxide and silicon dioxide doped with certain metals.

**Fig. 7**

## 1. Field of the invention

This invention relates to optical waveguide devices which have improved barrier properties after having been coated with silicon monoxide, and then with silicon dioxide doped with certain metals.

## 2. Background of the Invention

In optical communication systems, messages are transmitted typically through optical fibers by carrier waves of optical frequencies that are generated by sources, such as lasers or light emitting diodes. There is much current interest in such optical communication systems because they offer several advantages over other communication systems, such as having a greatly increased number of channels of communication and the ability to use other materials besides expensive copper cables for transmitting messages.

As the development of optical circuits proceeded, it became necessary to have optical waveguide devices which could couple, divide, switch and modulate the optical waves from one optical fiber to another, or from one waveguide device to another. For example devices see U.S. Patents 3,689,264, 4,609,252, 4,637,681, and 4,883,743, among others.

The preferred devices are made by photoforming the waveguides within photohardened polymeric structures, which however in harsh environments suffer from sensitivity to environmental gases, such as moisture in high humidity atmospheric conditions.

Thus, it is desirable to have a good barrier to oxygen and/or water vapor. However, the most common barrier materials, which are polymer based resins such as ethylene vinyl alcohol copolymer ("EVOH") or polyvinylidene chloride ("PVDC"), although exhibiting good barriers to oxygen or moisture, do so only under ideal conditions. Although EVOH can be an excellent oxygen barrier, it looses its barrier property at moderate to high relative humidity. Thus this material is not widely usable in applications involving high water vapor content. Although PVDC exhibits good moisture and oxygen barrier properties, it is not suitable for many applications, and has an undesirable yellow color. Other proposed alternatives to provide oxygen and water vapor barriers include laminations of aluminum foil and aluminum metallized film. Although these exhibit good barrier properties, they are completely opaque, and in addition they cannot be readily used in environments involving microwaves, which may be desirable many times in applications involving both optical and electronic conditions.

U.S. Patent 3,442,686 discloses multilayer structures as flexible transparent packaging film having good barrier properties to gases and liquids, comprising a flexible transparent organic polymeric base film having thereon an adherent, transparent, flexible highly gas- and liquid-impermeable, moisture resistant, continuous glassy coating of inorganic material, and a sealable, flexible, transparent top coating of organic polymeric material. The glassy coating is sandwiched between the base film and top coating. The preferred base films disclosed include polyester films such as Mylar® oriented, heat set polyester film. The preferred glassy coatings disclosed are the oxides of silicon and aluminum, and the coating thickness is disclosed to be 0.02 to 2 microns (20 to 2000 nm). Among the silicon oxides disclosed are silicon monoxide (SiO) and silicon dioxide ($SiO_2$). The glassy coating is formed on the base film by vacuum deposition. Examples of sealable top coatings disclosed are polyethylene and vinylidene chloride/acrylonitrile copolymer.

SiO is known to have better barrier properties than $SiO_2$, but unfortunately SiO is much more expensive than $SiO_2$ and imparts a yellow color to the package in the coating thickness required for development of its good barrier properties.

Nevertheless, after all the years of passage after publication of U.S. Patent 3,442,686 in 1969, a commercial product has finally been introduced (in Japan) in which the glassy coating is a layer of SiO sandwiched between two layers of polyethylene terephthalate (PET) film and a cast polyolefin top coating to form a packaging film. For one of the products, the SiO layer thickness is on the order of 2000 Angstroms (200 nm). Another product consists of a laminate in which two superimposed layers of SiO are present, each having a thickness of 1200 Angstroms (120 nm), giving a total effective SiO thickness of 2400 Angstroms (240 nm). These products have two disadvantages. First the product has a distinctly yellow color arising from the SiO layer(s) at the layer thicknesses involved, i.e., SiO has a yellow color, which becomes more intense as its thickness increases. It is believed that the yellow color of the SiO coating is somewhat ameliorated by carrying out the vapor deposition of the coating in the presence of oxygen, whereby the SiO is on the order of $SiO_{1.5}$. Second, the film constituting this commercial product has the disadvantage of high cost arising from the high thickness and high relative cost of SiO present in the film to provide the needed barrier properties. To their credit, however, these films are reported to be able to survive retorting at 125° C without loss of barrier property.

Effort has been made to use $SiO_2$ coating instead of SiO for economy reasons and in order to obtain a

EP 0 452 973 A2

colorless package. To some extent, the barrier properties of SiO₂ can be improved by increased thickness, but there is a limit to this approach because of decreasing flexibility with increasing thickness.

U.S. Patent 4,702,963 discloses a multilayer structure in the form of a packaging film in which an adhesion layer is first vacuum deposited on a flexible polymer substrate, followed by vacuum deposition of a barrier layer, to confer retortability to the packaging film. The adhesion layer can consist of Cr, which is preferred, Ta, Ni, Mo, oxides of Cr, alloys of Cr with Ta and Ni, co-deposited mixtures of Cr and SiO having at least 20% by weight of Cr and a lead-alumina-silica glass composition, and the adhesion layer is disclosed to have a thickness of 5 to 50 Angstroms (0.5 to 5 nm). The patent discloses that the barrier is preferably silicon monoxide or silicon dioxide, and that when silicon dioxide is used, it may be mixed with glass modifiers such as oxides of Mg, Ba, and Ca, or with fluoride of alkaline earth metals, e.g., MgF₂ to alter the color appearance of the overall structure. A chromium/SiO composite film is disclosed to produce a coating with a yellowish appearance, while a neutral gray appearance is disclosed to result from the mixture of SiO₂ with glass modifiers. The specific adhesion/barrier layer systems disclosed in the Examples are primarily chromium as the adhesive layer and SiO or SiO₂ as the barrier layer. The lead-alumina silica glass is used as an adhesive layer, as is Ta-Cr alloy, Ta, Mo, and chromium oxides. In some Examples, the SiO₂ layer is mixed with a modifier. In Table 4, small changes in adhesion layer thickness are disclosed to greatly diminish light transmission. In addition, retortability is determined from a simulated test in which silicon oxide layer adhesion is reported after retorting but not any barrier property of the multilayer structure. The approach taken in this patent has not achieved commercialization.

U.S. Patent 4,528,234 discloses a transparent multilayer structure comprising a plastic film having a vacuum deposited layer thereon of Al, Sn, Fe, Zn and/or Mg and then a top layer of a carboxyl-containing polyolefin layer. The metal layer is thin enough that the structure is transparent and the metal layer effects a secure bond between the plastic film and the carboxyl-containing layer. The patent also discloses that a vacuum deposited layer of silicon oxide or titanium oxide on one or both sides of the plastic film improves the barrier properties of the structure and a package made therefrom is particularly suitable for retorting. In the Examples, both silicon monoxide and silicon dioxide are used as the barrier layer. These multilayer constructions have not achieved commercialization.

Japanese patent publication 62-156943 discloses a multilayer barrier structure of multiple layers of film and multiple layers of a vacuum deposited metal such as Al, Zn, Cu, Pt, In, Sn, Au, Ag, Sn or metal compound such as silicon oxide. The layers of vacuum deposited metal or metal compound are separated from one another by a layer of film and/or a layer of adhesive.

3. Summary of the Invention

The present invention provides an excellent barrier by providing a multilayer structure of an optical waveguide device substrate with sequentially vacuum-deposited layers of SiO and SiO₂ thereon. The SiO layer can be thin enough that its yellow coloration is either barely perceptible or not perceptible at all. A thicker SiO₂ layer is provided. The combination of these layers on the optical waveguide device substrate provides a colorless barrier structure on an economical basis.

In one embodiment of the present invention the multilayer structure comprises the optical waveguide device substrate with sequentially vacuum deposited thin and thicker SiO and SiO₂ layers, respectively, thereon. Preferably, the thickness of the SiO layer on the substrate is about 10 to 75 nm (about 100 to 750 Angstroms) and of the SiO₂ layer deposited on the SiO layer is at least about 20 nm (200 Angstroms), with the thicknesses of these layers being selected to provide the barrier properties desired. The SiO layer at these small thicknesses provides virtually no barrier properties. The same is true for many of the thicknesses of SiO₂ except at the higher thicknesses. Together, however, these layers provide barrier properties better than the sum of the individual layers.

In another embodiment of the present invention, the foregoing-described SiO₂ layer incorporates a dopant selected from a wide variety of metallic materials which have the effect of improving the retortability of the multilayer structure as measured by barrier properties, instead of by a simulated retortability test involving only adhesion testing. The dopant improves the pre-retort barrier properties of the SiO₂ layer if no SiO underlayer were present. In the present invention, however, wherein the SiO underlayer is present, the dopant does not appear to appreciably affect pre-retort barrier properties. Instead, the presence of the dopant used in accordance with the present invention tends to stabilize these properties so that they carry over into the retorted multilayer structure.

Another embodiment of the present invention is the process for making a barrier structure from an optical waveguide device as the substrate by carrying out the sequential vacuum deposition to form the SiO and SiO₂ combination of layers described above.

3

## 4. Description of the Drawing

The reader's understanding of practical implementation of preferred embodiments of the invention will be enhanced by reference to the following detailed description taken in conjunction with perusal of the drawing figures, wherein:

Figure 1 is a perspective view of a photohardenable film removably adhered to a support.

Figure 2a is a schematic representation of a preferred way for forming an optical waveguide in a film on a support.

Figure 2b is a schematic representation of a second preferred way for forming an optical waveguide having a Y configuration in a film on a support.

Figure 2c is a schematic representation of a third preferred way for forming an optical waveguide having a different configuration in a film on a support.

Figure 3 depicts an optional step of flooding the film having a waveguide on a support with light.

Figure 4 shows a laminated structure comprising from top to bottom a support, a photohardenable layer, a film having a waveguide, and another support.

Figure 5 illustrates an optional step of flooding the structure of Figure 4 with light.

Figure 6 is the structure of Figure 4 or 5 with one of the supports removed.

Figure 7 is a perspective view of an optical waveguide device comprising from top to bottom a support, a photohardenable or photohardened layer, a film having a waveguide, a photohardenable layer, and a support.

Figure 8 shows the step of hardening the device of Figure 7 by flooding it with light.

Figure 9 shows the step of hardening the element of Figure 7 or the device of Figure 8 by heating it.

Figure 10 is a perspective view of an optical waveguide device for use in integrated optical systems, the device comprising from top to bottom a first hardened layer, a hardened film having a waveguide, and a second hardened layer.

Figure 11 shows the step of stabilizing the device of Figure 10 by heating it.

Figure 12 shows a test pattern comprising two straight waveguides, and one 1X4 splitter.

## 5. Detailed Description of the Invention

This invention relates to optical waveguide devices which have improved barrier properties after having been coated with silicon monoxide and then with silicon dioxide, which may or may not be doped with certain metals.

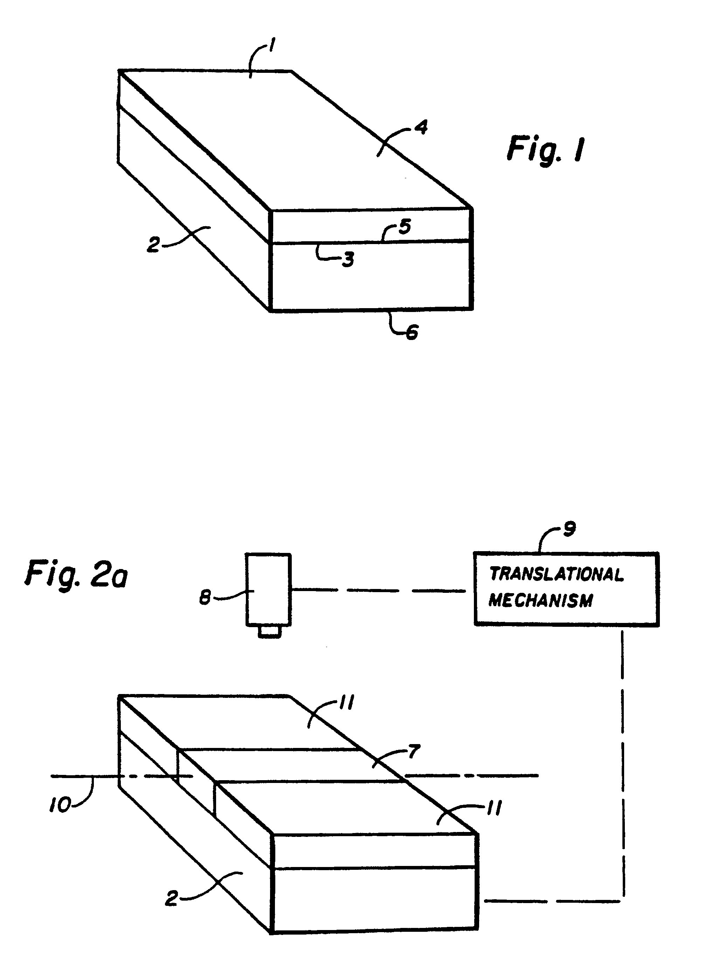

Although any type of optical waveguide devices having the waveguide embedded within their body may be used in accordance with this invention, the devices described in the detailed discussion of Figures 1 - 12 are preferable as being constructed of photohardenable materials and highly benefit from the provisions of the instant invention.

It should be understood that although the Figures illustrate only elementary optical waveguide devices for simplicity purposes, the degree of complexity of the individual devices does not have adverse consequences with regard to the present invention.

Throughout the following detailed description, similar reference numerals refer to similar parts in all Figures of the drawing. In addition, the word "element" is used to denote a constituent of a final optical waveguide device.

Referring to Figure 1, an element is illustrated comprising a substantially dry photohardenable film 1 removably adhered to a support 2. The film 1 has a first surface 3 and a second surface 4. The support similarly has a first surface 5 and a second surface 6. The first surface 5 of the support 2 is removably adhered to the first surface 3 of the film 1. The surfaces 3, 4, 5 and 6 of the film 1 and the support 2 are preferably substantially flat. The photohardenable film 1 may also be referred to in this discussion as a base layer or as a waveguide layer.

The film 1 may have a thickness in the range of 2 micrometers through 15 micrometers or above, preferably in the range of 4.5 micrometers through 8.0 micrometers, and more preferably about 5.3 micrometers.

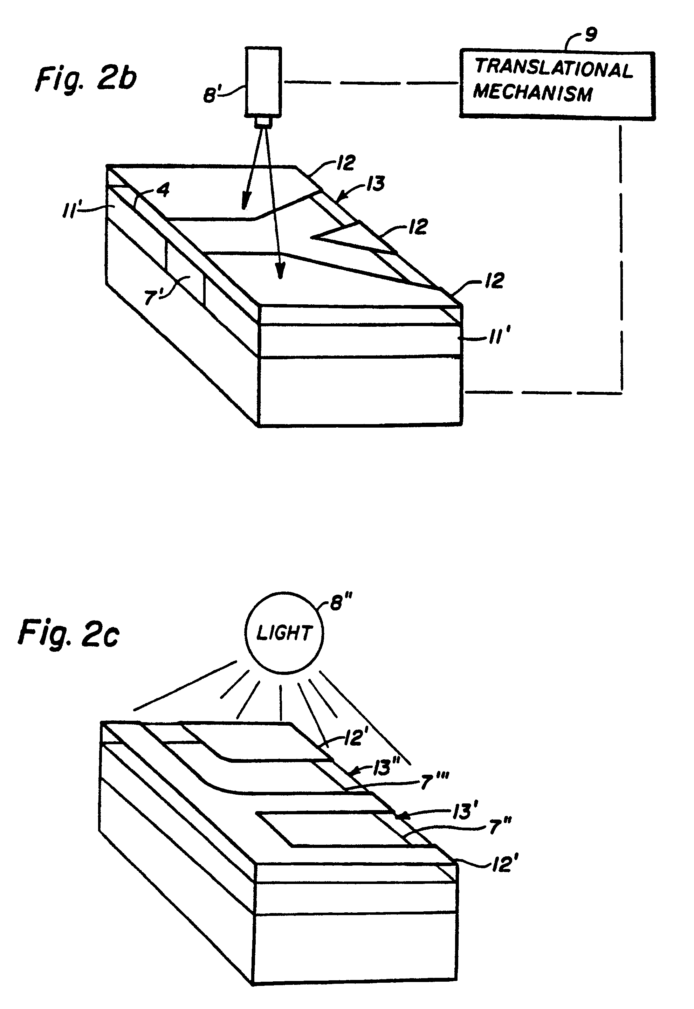

Referring to Figures 2a, 2b, and 2c, the first step of the method of making the preferred devices according to the present invention comprises exposing to light at least a first region 7 of the film 1 polymerizing at least one monomer in the film 1 and changing the refractive index of the region 7 to form at least a first optical waveguide. The term waveguide is defined by those skilled in this art to include the entire area that transmits radiant energy. This technically includes some area just around the exposed region can by considered to substantially be the waveguide. In theory, the waveguide formation is believed

4

to be due to a self-focusing property of the film material. Upon exposure to light, a polymerization reaction is induced in the exposed region. It is believed that there is interdiffusion between the exposed and unexposed regions, at least near the interface of these regions. This interdiffusion changes and typically increases the density of the exposed region raising its refractive index creating a lens-like exposed region directing the light in a self focused fashion to create a narrow smooth walled waveguide of approximately the same dimension as a mask area or light beam width. Three ways for performing this first step are illustrated in Figures 2a, 2b and 2c.

In figure 2a, a focused laser light source 8 exposes the region 7 to form the waveguide. A translational mechanism 9 is connected to the laser light source 8 and/or the support 2 for moving the laser light source 8, the support 2 or both, to create the waveguide having a desired and/or predetermined pattern. Here, the exposed region 7 has a substantially elongated box configuration having an optical axis 10 through the longitudinal center of the region 7. A physical cross section of the exposed region 7 perpendicular to the optical or center axis 10 is substantially rectangular. On both sides of the region 7 are remaining unexposed regions 11 of the film 1.

Figure 2b shows an alternate way for exposing a region 7'. Here, a non-focused laser light source 8' is generally directing actinic radiation toward the element of Figure 1. An opaque mask 12 is positioned between the laser light source 8 and the film 1, typically contacting and covering the second film surface 4. The mask 12 has at least a patterned area 13 therein through which actinic radiation from the light source 8' exposes region 7'. The patterned area can have any desired configuration, including the substantially Y configuration shown in Figure 2b.

Exposing the region 7' through this area 13, results in the creation of a waveguide having a substantially Y configuration. Described more generically, the region can have one end adapted to inlet or outlet light connected to a plurality of ends (e.g., 2, 3, 4...) adapted to inlet or outlet light. As in the Figure 2a case, there are remaining unexposed regions 11' in the film 1.

A third way for performing the exposing step of the present method is illustrated in Figure 2c. Here, actinic radiation from a light source 8'' exposes a first region 7'' and a second region 7''' of the film 1 through an opaque mask 12'. This mask 12' has first and second areas 13' and 13'' for the light to pass through exposing regions 7'' and 7''', respectively. The second area 13'' approaches and is in part parallel to the first area 13'. Thus, after exposure, the exposed second region 7''' and the corresponding waveguide. As a result, the waveguides can be positioned to exhibit evanescent coupling of light injected into one of the waveguides by gradually leaking or coupling the injected light into the other waveguide.

In each of these preferred ways, after exposure, the first and second surfaces 3 and 4 of the film 1 remain substantially flat. This facilitates subsequent laminating of layers on the film surfaces. As such, Figures 2a, 2b and 2c illustrate the making of optical waveguide elements, useful in making optical waveguide devices, which in turn are useful in integrated optical systems.

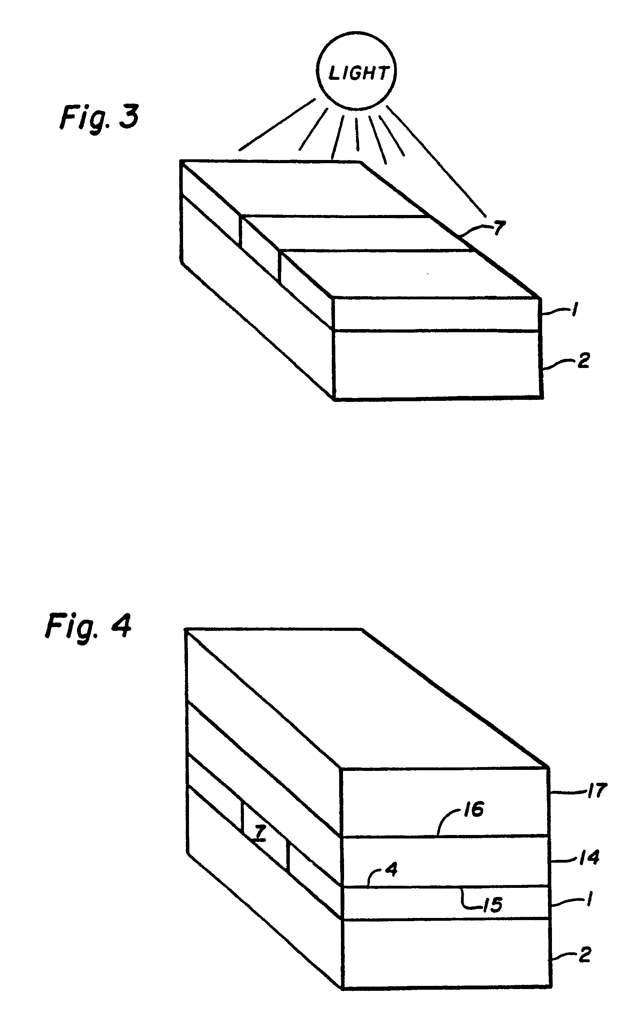

Figure 3 illustrates an optional step which follows the exposing step. The element resulting from the exposure step can be flooded with light, such as broadband ultraviolet light. This polymerizes some of at least one monomer in the film and typically most or all of one or all of the monomers in the film. This may allow for easy removal or attachment of the support 2. This resulting optical waveguide element can similarly be used in making optical waveguide devices, which devices are preferably used in the present invention.

Next, referring to Figure 4, a first substantially dry photohardenable layer 14 is laminated to the second film surface 4. The first layer 14 has first and second surfaces 15 and 16, respectively. The first layer 14 first surface 15 is laminated to the second film surface 4 by placing them in intimate contact and controllably applying pressure with rollers to remove air between the film 1 and layer 14. The first layer 14 is tacky. If the optional flooding step illustrated in Figure 3 is not performed, then the film 1 is also tacky. Thus, the film 1 and first layer 14 easily adhere to one another. A support 17 is removably adhered to the second surface 16 of the first layer 14. Figure 4 illustrates another optical waveguide element useful in making optical waveguide devices, which devices are preferably used in the present invention.

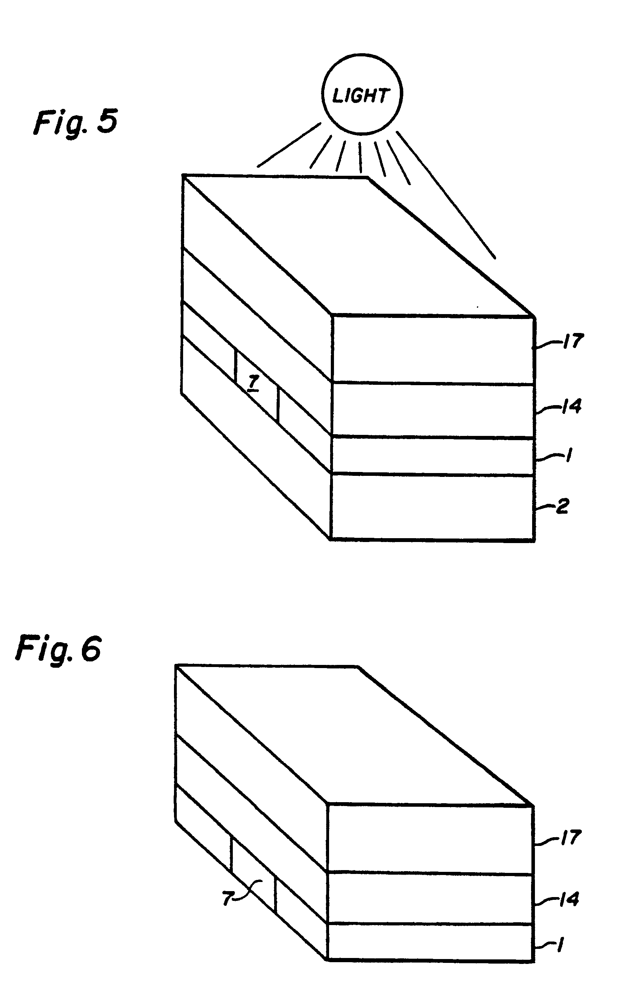

Figure 5 shows an optional flooding step similar to that illustrated in Figure 3, except the element being flooded is modified as described in relation to Figure 4. The element resulting from the first lamination step can be flooded with light, such as broadband ultraviolet light. This polymerizes some of at least one monomer (and typically most or all of one or all of the monomers) in the first layer 14 and further polymerizes some of the at least one monomer in the film 1 (if not already polymerized by a previous flooding step). Extensive crosslinking or polymerization occurs between the monomer(s) of the layer 14 adjacent to the monomer(s) of the film 1 forming a diffuse boundary line or region. The resulting optical waveguide element is also useful in making an optical waveguide device in accordance with this invention.

Figure 6 shows the element after the next step of removing the support 2 from the film 1 first surface 3.

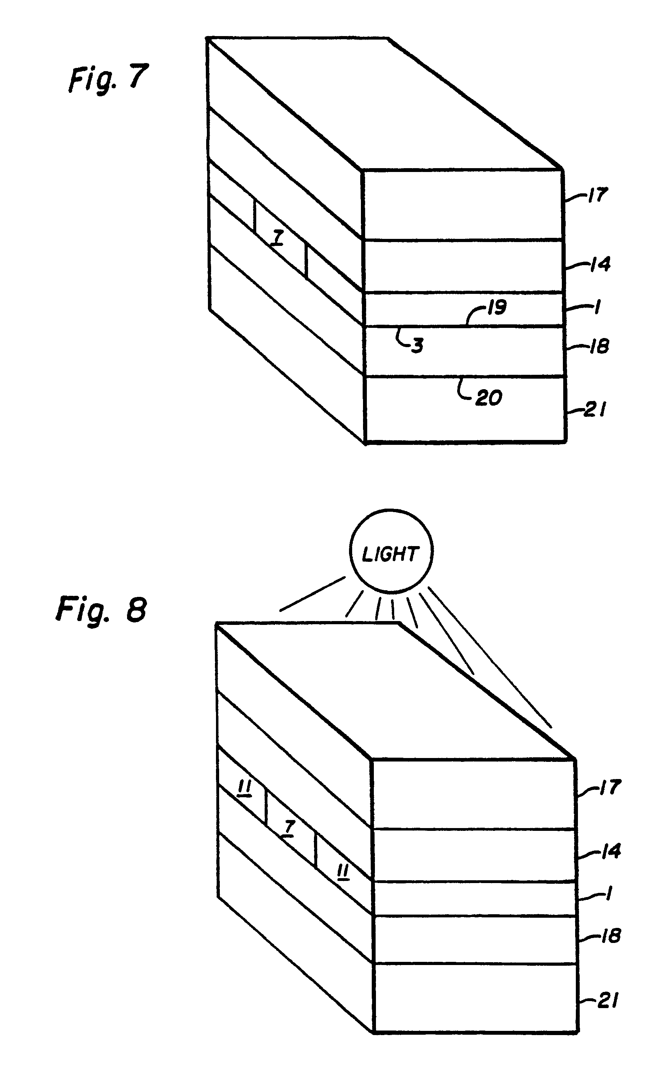

Then, referring to Figure 7, a second substantially dry photohardenable layer 18 is laminated to the film 1 first surface 3. The second layer 10 has first and second surfaces 19 and 20, respectively. The second layer 18 first surface 19 is laminated to the film first surface 3 by placing the in intimate contact and controllably applying pressure with rollers removing air between the film 1 and second layer 8. The second layer surfaces 19 and 20 are tacky and, thus, easily adhere to the film 1. A support 21 is removably adhered to the second layer second surface 20. Films 14 and 18 may also be referred to as inner buffer layers, since they surround the waveguide and they are in contact with the base or waveguide layer. If more buffer layers are built, mainly to strengthen the structure, outside the inner buffer layers, they are referred to as outer buffer layers.

Figure 8 illustrates a step of hardening the structure depicted in Figure 7 by flooding it with light, such as broadband ultraviolet light. Throughout this application, the term "broadband ultraviolet light" means light in the spectral region of about 350 through 400 nanometers. This step occurs for minutes, preferably 5, but can last longer. If this is the first flooding step, then this is the first polymerization of at least one monomer (and typically most or all of one or all monomers) in the remaining regions 11 in the film 1 and the first and second layers 14 and 18, respectively. It further polymerizes the at least one monomer in the region 7 of the film 1. If this is not the first flooding step, it polymerizes at least one monomer in the second layer and continues polymerizing the at least one monomer in the rest of the element. Some crosslinking or polymerization occurs between the previously polymerized film 1 and the monomer(s) in the second layer 18 forming a boundary line or region that is more evident than if the film 1 had not previously been flooded with light. Further, if this is not the first flooding step, for instance if buffer layer 14 was previously hardened by flooding it with light as illustrated in Figure 5, then it would be preferred to harden the film 1 and the buffer layer 18 of the element illustrated in Figure 8 by flooding light first through support 21, layer 18, film 1, layer 14, and then support 17. In other words, the structure should be flooded such that light passes through unhardened layers or films before previously hardened ones.

Furthermore, any one or all of the buffer layers and the film with a waveguide formed therein can be hardened by flooding them with light before the layers or film are laminated to the other parts. A device results having at least one buried channel waveguide in a laminated and photohardened matrix useful in integrated optical systems.

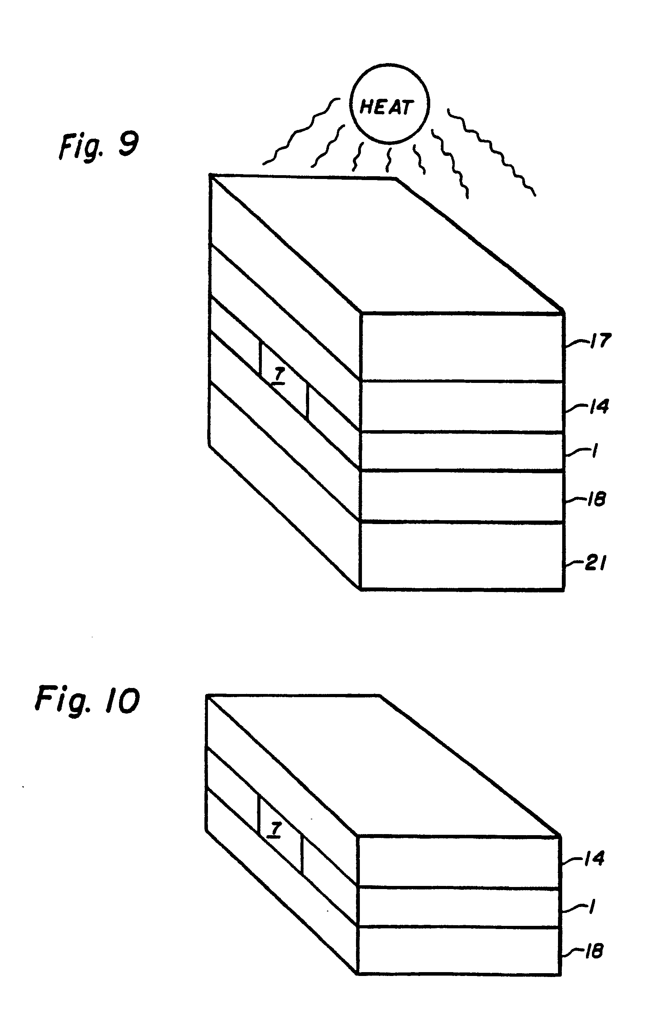

Figure 9 illustrates another possible step of hardening the structure depicted in Figure 7 by heating it. Actually, the layers and film can be heated before, in combination with, after, or in lieu of the light flooding step to harden of further harden the device. This heating step occurs at a temperature in the range of about 50° C through 200° C and preferably in the range of about 100° C through 150° C for a duration of minutes, preferably 5.

Photohardenable compositions are typically less sensitive to temperatures up to 100° C than above 100° C. However, hardening may be initiated as low as 50° C of held at the temperature for a sufficient period of time. As the temperature is increased beyond 100° C, thermally initiated hardening increases significantly.

After the hardening step, a maximum refractive index increase in the localized waveguide region as measured by an ASUJENA Interphako microscope occurs in the film in the range of 0.001 through 0.40 measured at 546 nanometers wavelength. The localized refractive index increase, n, may be derived by conventional shearing interference microscopy techniques and is calculated assuming a uniform index shift through the film such that n is effectively an average using the following equations:

$$f\lambda = \Delta nd$$
$$f = \frac{a}{b}$$
$$\frac{a\lambda}{b} = \Delta nd$$

where
    d =    assumed waveguide thickness, typically the film thickness
    a =    waveguide fringe shift
    b =    fringe spacing
    $\lambda$ =    0.546 $\mu$, wavelength of light in the microscope

This localized refractive index increase is contrasted and is not to be confused with a refractive index modulation measured from gratings prepared holographically.

6

After the hardening step, the waveguide is transparent in the range of 0.6 through 1.6 micrometers wavelength. It is effectively transparent at 1.3 micrometers for single mode operation. Also after the hardening step, the maximum refractive index of the matrix except in and near the waveguide is in the range of 1.45 through 1.60 measured at 632 nanometers depending on formulation and/or extent of interlayer diffusion from adjoining layers or film of different indexes. The refractive index is determined by using an ABBE refractometer manufactured by Karl Zeiss.

The supports 17 and 21 can be removed from the device resulting from the hardening step as shown in Figure 10.

It has been found that a time delay of 5 to 120 minutes, preferably 20 to 30 minutes, after each flooding step and before removal of support sheets facilitate interlayer diffusion and polymerization.

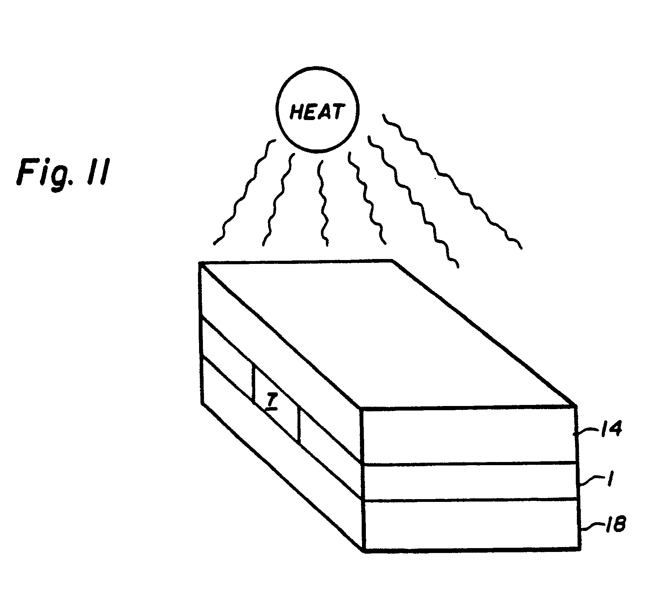

Figure 11 shows an optional, but preferred, step of stabilizing the device shown in Figure 10 by heating it, typically after the hardening step. This heating step similarly occurs at a temperature in the range of about 50°C thorough 200°C and preferably in the range of about 100°C through 150°C. However, this stabilizing step occurs longer than the hardening step. Preferably the stabilizing step occurs in the range of about 20 minutes through 2 hours and more preferably for about an hour. This heating makes the device more environmentally stable ensuring water and other elements in the environment will not interfere with proper operation of the device. Further, this heating provides thermal stabilization of optical and mechanical properties allowing operation of the resulting device over a wide range of temperatures without modification of the device properties.

All layers can be made out of the same material as the film 1. Then the hardened device matrix is substantially homogeneous in composition and refractive index except in and near the waveguide. Preferably, however, after the hardening step, the waveguide has a refractive index about 0.005 and 0.060 greater than the hardened film and about 0.001 to 0.025 greater than the hardened layers. Of course, regardless of whether different materials are used for different layers and the film, the composition and refractive index in each exposed region is substantially homogeneous in composition and refractive index.

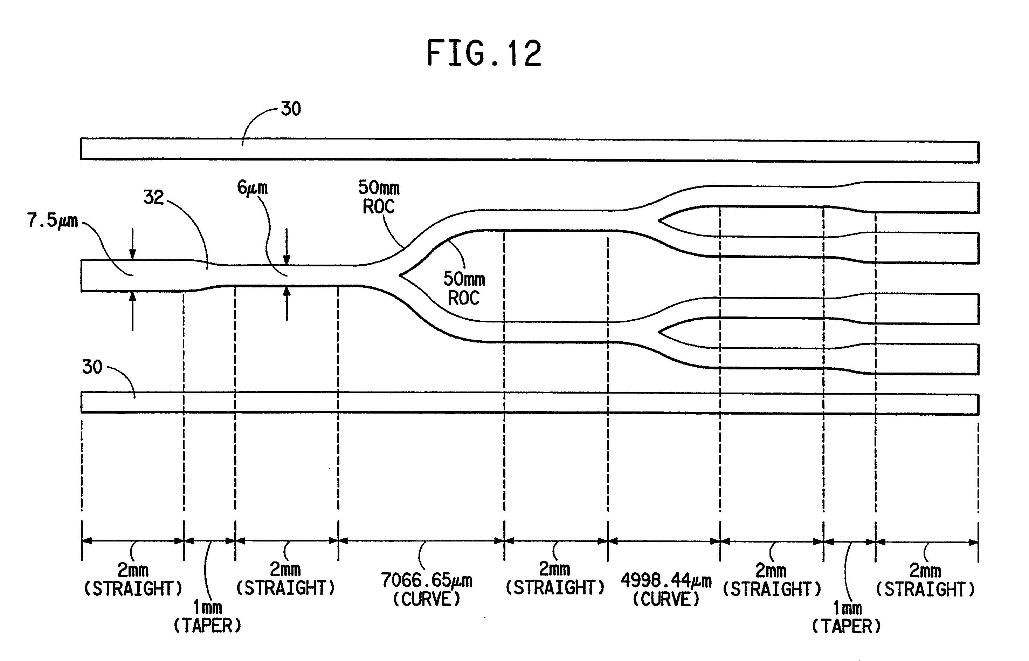

Figure 12 shows a test pattern, which has been used for evaluation purposes. It comprises two straight waveguides 30, and one 1X4 splitter 32. The dimensions and the radius of curvature (ROC) are shown in Figure 12. The pattern may be used in a photomask to produce the respective waveguides on the base or waveguide layer by exposure through the photomask. Evidently, the areas represented by 30 and 32 are transparent in the photomask, the rest of the area being opaque.

The photohardenable base and buffer layers used herein are thermoplastic compositions which upon exposure to actinic radiation from crosslinks or polymers of high molecular weight to change the refractive index and rheological character of the composition(s). Preferred photohardenable materials are photopolymerizable compositions, such as disclosed in Haugh U.S. Patent 3,658,526 and more preferred materials are described copending in European Patent Applications 0,324,480, 0,324,481 and 0,324,482. In these materials, free radical addition polymerization and crosslinking of a compound containing one or more ethylenically unsaturated groups, usually in a terminal position, hardens and insolubilizes the composition. The sensitivity of the photopolymerizable composition is enhanced by the photoinitiating system which may contain a component which sensitizes the composition to predetermined radiation sources, e.g., visible light. Conventionally a binder is the most significant component of a substantially dry photopolymerizable base or layer in terms of what physical properties the base or layer will have while being used in the invention. The binder serves as a containing medium for the monomer and photoinitiator prior to exposure, provides the base line refractive index, and after exposure contributes to the physical and refractive index characteristics needed for the base layer of buffer layer. Cohesion, adhesion, flexibility, diffusibility, tensile strength, in addition to index of refraction are some of the many properties which determine if the binder is suitable for use in the base layer or the buffer layer.

Dry base or layer photohardenable elements contemplate to be equivalent are photodimerizable or photocrosslinkable compositions such as disclosed in Celeste U.S. Patent 3,526,504 or those compositions in which hardening is achieved by a mechanism other than the free radical initiated type identified above.

While the photopolymerizable base or layer is a solid sheet of uniform thickness it is composed of three major components, a solid solvent soluble performed polymeric material, at least one liquid ethylenically unsaturated monomer capable of addition polymerization to produce a polymeric material with a refractive index substantially different from that of the performed polymeric material, or binder, and a photoinitiator system activatable by actinic radiation. Although the base or layer is a solid composition, components interdiffuse before, during and after imaging exposure until they are fixed or destroyed by a final uniform treatment usually by a further uniform exposure to actinic radiation. Interdiffusion may be further promoted by incorporation into the composition of an otherwise inactive plasticizer.

In addition to the liquid monomer, the composition may contain solid monomer components capable of

7

interdiffusing in the solid composition and reacting with the liquid monomer to form a copolymer with a refractive index shifted from that of the binder.

In the preferred compositions for use as the base layer or buffer layers in this invention, the preformed polymeric material and the liquid monomer are selected so that either the preformed polymeric material or the monomer contains one or more moieties taken from the group consisting essentially of substituted or unsubstituted phenyl, phenoxy, naphthyl, naphthyloxy, heteroaromatic groups containing one to three aromatic rings, chlorine, and bromine and wherein the remaining component is substantially free of the specified moieties. In the instance when the monomer contains these moieties, the photopolymerizable system hereinafter is identified as a "Monomer Oriented System" and when the polymeric material contains these moieties, the photopolymerizable system hereinafter is identified as a "Binder Oriented System."

The stable, solid, photopolymerizable compositions preferred for this invention will be more fully described by reference to the "Monomer Oriented System" and "Binder Oriented System." The Monomer Oriented System is preferred for the base layer.

The monomer of the Monomer Oriented System is a liquid, ethylenically unsaturated compound capable of addition polymerization and having a boiling point above 100°C. The monomer contains either a phenyl, phenoxy, naphthyl, naphthoxy, heteroaromatic group containing one to three aromatic rings, chlorine or bromine. The monomer contains at least one such moiety and may contain two or more of the same or different moieties of the group, provided the monomer remains liquid. Contemplated as equivalent to the groups are substituted groups where the substitution may be lower alkyl, alkoxy, hydroxy, carboxy, carbonyl, amino, amido, imido or combinations thereof provided the monomer remains liquid and diffusible in the photopolymerizable layer.

Preferred liquid monomers for use in the Monomer Oriented System of this invention are 2-phenoxyethyl acrylate, 2-phenoxyethyl methacrylate, phenol ethoxylate acrylate, 1-(p-chlorophenoxy) ethyl, p-chlorophenyl acrylate, phenyl acrylate, 1-phenylethyl acrylate, di(2-acryloxyethyl) ether of bisphenol-A, and 2-(2-naphthyloxy) ethyl acrylate.

While monomers useful in this invention are liquids, they may be used in admixture with a second solid monomer of the same type, e.g., N-vinyl-carbazole, ethylenically unsaturated carbazole monomers such as disclosed in Journal of Polymer Science: Polymer Chemistry Edition, Vol. 18, pp. 9-18 (1979) by H. Kamagawa et al., 2-naphthyl acrylate, penta-chlorophenyl acrylate, 2,4,6-tribromophenyl acrylate, and bisphenol A diacrylate, 2-(2-naphthyloxy) ethyl acrylate, and N-phenyl maleimide.

The solvent soluble polymeric material or binder of the Monomer Oriented System is substantially free of phenyl, phenoxy, naphthyl, naphthyloxy, heteroaromatic group containing one to three aromatic rings, chlorine and bromine.

Preferred binders for use in the Monomer Oriented system of this invention are cellulose acetate butyrate polymers; acrylic polymers and inter polymers including polymethyl methacrylate, methyl methacrylate/methacrylic acid and methylmethacrylate/acrylate acid copolymers, terpolymers of methylmethacrylate/C2-C4 alkyl acrylate or methacrylate/acrylic or methacrylic acid; polyvinylacetate; polyvinyl acetal, polyvinyl butyral, polyvinyl ormal; and as well as mixtures thereof.

The monomers of the Binder Oriented System is a liquid ethylenically unsaturated compound capable of addition polymerization and having a boiling point above 100°C. The monomer is substantially free of moieties taken from the group consisting essentially of phenyl, phenoxy, naphthyl, naphthyloxy, heteroaromatic group containing one to three aromatic rings, chlorine and bromine.

Preferred liquid monomers for use in Binder Oriented Systems of this invention include decanediol diacrylate, iso-bornyl acrylate, triethylene glycol diacrylate, diethyleneglycol diacrylate, triethylene glycol dimethacrylate, ethoxyethoxyethyl acrylate, triacrylate ester of ethoxylated trimethylolpropane, and 1-vinyl-2-pyrrolidinone.

While monomers used in Binder Oriented Systems are liquids, they may be used in admixture with a second solid monomer of the same type, e.g., N-vinyl-caprolactam.

The solvent soluble polymeric material or binder of the Binder Oriented system contains in its polymeric structure moieties taken from the group consisting essentially of phenyl, phenoxy, naphthyl naphthyloxy or heteroaromatic group containing one to three aromatic rings as well as chloro or bromo atoms. Contemplated as equivalent to the groups are substituted groups where the substitution may be lower alkyl, alkoxy, hydroxy, carboxy, carbonyl, amido, imido or combinations thereof provided the binder remains solvent soluble and thermoplastic. The moieties may form part of the monomeric units which constitute the polymeric binder or may be grated onto a pre-prepared polymer or interpolymer. The binder of this type may be a homopolymer or it may be an interpolymer of two or more separate monomeric units wherein at least one of the monomeric units contains one of the moieties identified above.

Preferred binders for use in the Binder Oriented System include polystyrene, poly (styrene/acrylonitrile), poly(styrene/ methyl methacrylate), and polyvinyl benzal as well as admixtures thereof.

The same photoinitiator system activatable by actinic radiation may be used in either the Monomer Oriented System or the Binder Oriented System. Typically the photoinitiator system will contain a photoinitiator and may contain a sensitizer which extends the spectral response into the near U.V. region and the visible spectral regions.

Preferred photoinitiators include CDM-HABI, i.e., 2-(o-chlorophenyl)-4,5-bis(m-methoxyphenyl)- imidazole dimer; o-Cl-HABI, i.e., 1,1'-biimidazole, 2,2'-bis-(o-chlorophenyl)-4,4',5,5'-tetraphenyl-; and TCTM-HABI, i.e., 1H-imidazole, 2,5-bis(o-chlorophenyl)-4-3,4-dimethoxyphenyl-, dimer each of which is typically used with a hydrogen donor, e.g., 2-mercaptobenzoxazole.

Preferred sensitizers include the following:

DBC, i.e., cyclopentanone, 2,5-bis-(diethylamino)-2-methylphenyl)methylene);

DEAW, i.e., cyclopentanone, 2,5-bis-((4-(diethylamino)-phenyl)methylene); and

Dimethoxy-JDI, i.e., 1H-inden-1-one, 2,3-dihydro-5,6-dimethoxy-2-((2,3,6,7-tetrahydro-1H,5H-benzo[i,j]-quinolizine-9-yl)-methylene)-.

The solid photopolymerizable compositions of this invention may contain a plasticizer. Plasticizers of this invention may be used in amounts varying from about 2% to about 20% by weight of the compositions preferably 5 to 15 wt. %.

Preferred plasticizers for use in simple cellulose acetate butyrate systems are triethyleneglycol dicaprylate, tetraethyleneglycol diheptanoate, diethyl adipate, Brij 30 and tris-(2-ethylhexyl)phosphate. Similarly, triethyleneglyco dicaprylate, diethyl adipate, Brij 30, and tris(2-ethylhexyl)- phosphate are preferred in "Monomer Oriented Systems" where cellulose acetate butyrate is the binder.

Other components in addition to those described above can be present in the photopolymerizable compositions in varying amounts. Such components include: ultraviolet radiation absorbing material, thermal stabilizers, hydrogen donors, oxygen scavengers and release agents.

Amounts of ingredients in the photopolymerizable compositions will generally be within the following percentage ranges based on total weight of the photopolymerizable layer: monomer, 5-50%, preferably 15-35%; initiator 0.1-10%, preferably 1-5%; binder, 25-75%, preferably 45-65%; plasticizer, 0-25%, preferably 5-15%; other ingredients 0-5%, preferably 14%.

The supports can be any substance transparent to actinic radiation that provides sufficient support to handle the combined base and layer. Preferably the support is transparent to light in the spectral region of 0.6 through 1.6 micrometers wavelengths. The term "support" is meant to include natural or synthetic supports, preferably one which is capable of existing in a flexible or rigid film or sheet form. For example, the support or substrate could be a sheet or film of synthetic organic resin, or a composite of two or more materials. Specific substrates include polyethylene terephthalate film, e.g., resin-subbed polyethylene terephthalate film, flame or electrostatic discharge treated polyethylene terephthalate film, glass, cellulose acetate film, and the like. The thickness of the supports has no particular importance so long as it adequately supports the film or layer removably adhered to it. A support thickness of about twenty-five (25) to fifty (50) micrometers using polyethylene terephthalate provides sufficient rigidity.

## TABLE A

### BASE OR WAVEGUIDE LAYER

| INGREDIENT | WEIGHT % |
|---|---|
| Cellulose acetate butyrate[1] | 56.54 |
| Phenoxyethyl acrylate | 35.00 |
| Triethyleneglycol dicaprylate | 5.00 |
| o-Cl HABI[1] | 1.00 |
| 2-Mercaptobenzoxazole | 1.89 |
| Sensitizing dye (DEAW)[3] | 0.56 |
| 2,6-Di-t-butyl-4-methylphenol | |

---

[1]  Eastman type CAB 531-1

[2]  1.1'-bis-biimidazole, 2,2'-bis-o-chlorophenyl-4,4',5,5'-tetraphenyl; CAS 1707-68-2

[3]  2,5-bis([4-diethylamino)-phenyl]methylene)cyclopentanone

## TABLE B
### BUFFER LAYER

| INGREDIENT | WEIGHT % |
|---|---|
| Poly(vinylacetate), MW 500,000, CAS 9003-20-7 | 66.04 |
| Phenol ethoxylate monoacrylate, CAS 56641-05-5 | 17.02 |
| Ethoxylated bisphenol A diacrylate, CAS 24447-78-7 | 3.00 |
| N-Vinyl carbazole | 7.94 |
| o-Cl-HABI[1] | 3.69 |
| 4-Methyl-rH-1,2,4-triazole-3-thiol, CAS 24854-43-1 | 2.09 |
| FC-430[2] | 0.19 |
| Sensitizing dye (DEAW)[3] | -- |

---

[1]  1,1'-bis-biimidazole, 2,2'-bis-o-chlorophenyl-4,4',5,5'-tetraphenyl; CAS 1707-68-2

[2]  fluoroaliphatic polymeric esters, 3M Company, St. Paul, MN

[3]  2,5-bis([4-(diethylamino)-phenyl]methylene)cyclopentanone

## TABLE C

### BUFFER LAYER

| INGREDIENT | WEIGHT % |
|---|---|
| Cellulose acetate butyrate[1] | 57.11 |
| Phenoxyethyl acrylate | 38.00 |
| o-Cl HABI[2] | 3.00 |
| 2-Mercaptobenzoxazole | 1.89 |

-----------------------

1   Eastman type CAB 531-1

2   1,1'-bis-biimidazole, 2,2'-bis-o-chlorophenyl-
    4,4',5,5'-tetraphenyl: CAS 1707-68-2

In order to improve the performance of optical waveguide devices, such as the ones described above against the environment, sequential coatings of silicon monoxide and silicon dioxide are applied.

Preferably the surface of the optical waveguide device substrate which will receive the SiO layer will be smooth, e.g., having a surface roughness of less than about 50 nm as measured by an optical profilometer, obtainable for example from Wyco.

Vacuum deposition of SiO and $SiO_2$ materials to form a layer on a substrate is a conventional process such as by evaporation of the silicon oxide or sputtering. The evaporative process can be performed using thermal processes such as resistance heating, electron beam heating, or induction heating of the silicon oxide source. This causes the source to vaporize and then deposit on the optical waveguide device substrate positioned in the vacuum chamber. In sputtering, an ion beam or magnetically confined plasma (magnetron) displaces material from the silicon oxide target, causing this displaced material to deposit on the substrate or the SiO layer on the substrate, as the case may be. Sometimes these processes are referred to as vapor deposition, but the term "vacuum deposition" is used herein to describe these processes, since both the evaporative process and sputtering are carried out in a vacuum.

The area of the substrate to be coated is positioned either in a continuous process or batch process in chamber within which a vacuum is drawn. When the substrate is thin and in the form of a film, the film may be made unaccessible to the vacuum deposition on one surface of the film so that only the opposite surface receives the vacuum deposited layers. This can be accomplished by positioning the film against the "floor" of the vacuum chamber so that only the exposed surface of the film receives the vacuum deposited layers.

The silicon oxide source is placed in the vacuum chamber and then exposed to the evaporative or sputtering process. The oxide displaced from the source then forms the coating desired on the resin substrate. The thickness of the coating is determined by the residence time of the substrate in the chamber and/or the amount of silicon oxide target present in the chamber relative to the area of substrate present in the chamber and the energy applied per unit of target area.

In accordance with the present invention, the SiO coating is deposited on the substrate first, followed by deposition of the $SiO_2$ coating onto the SiO layer. In a continuous process, this will be carried out in successive vacuum chambers or in successive vacuum deposition stations in a single vacuum chamber. The same station may be used in a batch process, with the SiO target being replaced by the $SiO_2$ target.

Sufficient vacuum is drawn within the vacuum chamber so that the free path of the silicon oxide molecules is sufficient to reach and therefore enable deposition of the SiO and $SiO_2$ layers on the resin substrate. The vacuum used in the experiments described in the Examples herein generally fell within the range of about 1 to 100 microtorr (760 torr = 1 atm) and this range of vacuum should generally be sufficient depending of the distance between the source and the resin structure. The greater the distance, the higher the vacuum needed, e.g., 1-50 microtorr.

In the SiO layer, SiO is the essential component. Cr as required in the adhesion layer in U.S. Patent 4,702,963 when SiO is used therein is not required in the present invention. The SiO need not be entirely monoxide, however, since a minor proportion of $SiO_2$ may be present either by virtue of carrying out the vacuum deposition in the presence of O2 or by having $SiO_2$ present as a minor proportion of the SiO target. The $SiO_2$ diluent in the SiO layer tends to eliminate any perceptible yellow color from the greater thicknesses within the 10 to 75 nm layer thickness range employed in the present invention. As thickness of the SiO layer increases within this range, both the tendency towards yellow coloration and cost increase, which can be essentially offset by incorporating a minor proportion of $SiO_2$ in the SiO layer or by other means increasing the atomic ratio of oxygen to silicon. Preferably, the ratio of oxygen to silicon in the SiO layer does not exceed about 1.4 and more preferably, does not exceed 1.25. These oxygen/silicon ratios, i.e., in the range of 1:1.40, can be accomplished by including $SiO_2$ alone with SiO in the vacuum deposition process. Excessive amounts of $SiO_2$ or greater proportions of oxygen in the SiO layer tend to detract from barrier properties of the combined layers. It is essential that some thickness of SiO layer be present, since it is the combination of resin substrate and the SiO and $SiO_2$ layers that provides the desirable barrier properties. The preferred SiO layer thickness is about 10 to 50 nm.

The $SiO_2$ layer will generally not require a thickness of greater than about 500 nm (5000 Angstroms) and preferably has a thickness of about 50 to 350 nm (500 to 3500 Angstroms). The $SiO_2$ layer also preferably is "doped" with an effective amount of metallic material which improves the barrier properties of the layer during retorting as compared to barrier properties without dopant being present, and preferably substantially stabilizes the barrier properties so that they do not appreciably deteriorate upon retorting.. For demanding barrier utilities, the doped $SiO_2$ layer in combination with the SiO layer provides results equivalent to SiO at similar overall thickness but without the high cost of SiO. It has been discovered that the magnesium, and barium modifiers for $SiO_2$, disclosed in U.S. Patent 4,702,963 in fact improve the barrier property of the $SiO_2$ layer. It has also been discovered that certain materials not disclosed in that patent, such as Ti, Zr,Zn, Al, In, Pb, W, Cu, Sn, Cr, Fe, Mn, Sb, and Co or oxides, halides, such as chlorides and fluorides, and carbonates, thereof or mixtures thereof vacuum deposited with the vacuum deposition of the $SiO_2$ layer also similarly improve the barrier properties of the layer. Generally the effective amount of metal dopant which improves the barrier properties of the $SiO_2$ layer will be within the range of about 0.5 to 30% based on the total weight of the layer, and preferably 2 to 15% based on the weight of the layer depending on the particular dopant used and the barrier result desired.

The dopant can be incorporated into the $SiO_2$ layer either by evaporating a single source of a physical or fused mixture of the dopant and $SiO_2$, or by co-depositing the dopant and the $SiO_2$ from two or more sources simultaneously. In both cases, the dopant can be in a metallic form, or in the form of an oxide, silicide, silicate, halide or carbonate and the like. In the case of depositing from a single source, the proportion of the dopant present in the deposited $SiO_2$ layer may vary from the composition of the source. Such proportion can be determined for a particular source composition and conditions of vacuum deposition and can be adjusted to the proportion desired by adjustment of the source composition. In case of either deposition method, the composition of the coating can be determined by analysis of atomic absorption using inductively coupled plasma (ICP), which is a conventional analysis procedure. This analysis primarily detects the elemental metal in the $SiO_2$. Therefore, the weight percents of dopant disclosed herein are based on the elemental metal of the metal dopant. Thus, decomposition products, e.g., CO2 from carbonates, which do not become part of the $SiO_2$ layer are not included in weight percents of dopant in the $SiO_2$ layer. The weight percents of dopant disclosed herein refer to the composition of the $SiO_2$ layer unless otherwise indicated. These same weight percents may, however, be present in the source(s) for vacuum deposition (co-deposition), and as previously described, the resultant composition of the $SiO_2$ layer for the vacuum deposition conditions used can then be determined, and the source composition can then be adjusted in subsequent runs to obtain the final $SiO_2$ composition desired. More often, the source composition will be adjusted to provide the barrier properties desired for the multilayer structure rather than to analyze the $SiO_2$ layer for its dopant content.

The oxidation state of the metal as it resides in the coating matrix of silicon dioxide is not necessarily clearly understood or well defined. Thus if an elemental metal is used as the source for the dopant, the deposited metal atoms or particles may interact with the oxygen atoms on the matrix to form a partially or completely oxidized material. Alternatively, if an oxide of the metal is used as the source, it is not necessarily known nor is it necessarily important whether the metal is deposited into the glassy matrix as the oxide or as the elemental metal.

Contrary to the light transmission results reported in U.S. Patent 4,702,963, the light transmission of multilayer structures of the present invention are high, preferably not appreciably degrading the light transmission of the resin substrate. The $SiO_2$ layer, even containing metallic material dopant can be and is preferably colorless, so that the entire multilayer structure is colorless.

As previously stated herein, the metal dopant appears to have the effect of enabling the barrier properties of the multilayer structure to survive retorting, e.g., prolonged contact with boiling water under pressure at temperatures at least 125° C.

One measure of improved barrier properties is reduced oxygen transmission through the multilayer structure.

Multilayer structures of the present invention can achieve barrier properties characterized by an oxygen transmission rate (OTR) of less than about 7 $cc/m^2$ Day Atm, preferably before and after retorting. The preferred oxygen transmission rate before and after retorting is less than about 3 $cc/m^2$ Day Atm. The oxygen transmission is measured on a Model "OX-TRAN 1000" made by Modern Controls Inc. of Minneapolis, MN at 30°C and at 80% relative humidity, using 100% (1 Atm pressure) oxygen for the permeation tests, with the result being normalized to 1 $m^2$ of multilayer structure and one day's duration for the test. The retorting procedure used for these tests involves placing the multilayer structure in a bath of water in an autoclave under 2.5 Atm absolute pressure at 125°C for 30 minutes in addition to the time for heating up (30 minutes) and cooling down (15 minutes) the water bath in which the multilayer structure is immersed. Multilayer structures of the present invention also exhibit low permeability to passage of water vapor, both before and after retorting.

The protective layer can be selected from any plastic resin that adheres to the $SiO_2$ layer or that adheres to the $SiO_2$ layer via an intervening adhesive layer. Preferably this adhesion will survive retorting process as well. Examples of protective layers include a layer of polyester adhered to the $SiO_2$ layer via an adhesive, polyvinylidene chloride, polyethylene, polypropylene, ethylene/vinyl acid copolymer, ethylene/acrylic or methacrylic acid copolymer, ionomer, copolymers of acrylonitrile, and polyamide. The protective layer can be applied to the $SiO_2$ layer by conventional processes such as adhesive or thermal laminating or extrusion coating onto the $SiO_2$ layer simultaneous with extrusion of the intervening adhesive, if any. The protective layer can also be provided by solvent or dispersion coating onto the $SiO_2$ layer, using multiple coatings if thickness is greater than achievable by single coating is desired. The thickness of the protective layer will generally be about 0.5 to 100 microns thick, preferably 10 to 25 microns (0.010 to 0.025 mm). In one embodiment, the protective layer is biaxially oriented PET film (0.0234 mm thick), which is laminated to the exposed surface of the $SiO_2$ layer via a co-polyester adhesive resin available as Adcote 506-40 (2.7 $g/m^2$) from Morton Chemicals and a nip roll heated at 120°C for pressing the film and laminate structure against one another.

The resultant laminates of the present invention are useful as a wide variety of packaging, from rigid to semi-rigid containers to packaging film, which will dictate the choice and shape of the resin substrate. For packaging film, the resin substrate will be in the form of a film generally having a thickness of about 8 to 150 microns, after 12 to 50 microns or preferably about 15 to 25 microns (0.012 to 0.025 mm).

Examples of the present invention are as follows (parts and percents are by weight unless otherwise indicated):

Example 1

This Example demonstrates the necessity of the $SiO/SiO_2$ multilayer combination in terms of barrier properties.

Layers of the silicon oxides were formed by electron beam evaporation on the side of Mylar® D PET film (0.0234 mm thick) without slip nodules to form a barrier film.

Details of the electron beam evaporation procedure are as follows: the electron beam evaporator used was the type using a single crucible bent beam source. There are several different manufacturers of equipment providing this beam source, e.g., Leybold AG, Alzenau, West Germany; Balzers AG, Furstentum Liechtenstein; Temescal of Berkeley, CA; or Denton Vacuum of Cherry Hill, NJ, the latter being used in this Example.

The accelerator voltage was continuously adjusted to sweep the electron beam across the material in the crucible forming the hearth of the electron beam evaporator to give a uniform erosion of the crucible's silicon oxide contents. The filament current (and subsequently the beam current) was adjusted to give a high deposition rate which resulted in a relatively high background pressure of about $1 \times 10^{-4}$ torr. This pressure was not so high as to cause premature arc over of the electron beam gun. The thickness of the deposits were monitored by a calibrated oscillating quartz crystal monitor such as made by Veeco Instruments Inc., Plainview, NY, and the vacuum deposition process was stopped when the desired oxide layer thickness was reached.

The results of the experiments reported under this Example are shown in Table 1.

## Table 1

### Barrier Film O2 Permeability

| | SiO layer thickness (nm) on the PET film | SiO₂ layer thickness (nm) on the SiO layer | OTR (no retort) (cc/m2 Day Atm) |
|---|---|---|---|
| a. | 31 | 0 | 43.2 |
| b. | 0 | 355 | 10.1 |
| c. | 0 | 301 | 76.4 |
| d. | 0 | 303 | 77.1 |
| e. | 0 | 314 | 7.1 |
| f. | 0 | 300 | 84.3 |
| g. | 0 | 315 | 62.1 |
| h. | 30 | 202 | 1.1 |
| i | 102 | 184 | 2.3 |
| j. | 35 | 237 | 1.2 |
| k. | 15 | 214 | 2.5 |

OTR is the cc of O2 transmitted across the multilayer structure in one day with a partial pressure difference of one atmosphere of oxygen, under the further conditions described hereinbefore. In this Example, the OTR was determined on unretorted barrier film.

Experiments h., j., and k. are examples of the present invention and provide the lowest oxygen permeability, demonstrating the best barrier properties when the combination of SiO and SiO₂ layers are used.

Experiment a. shows that the thin layer of SiO by itself on the PET film substrate provides poor barrier property. The film by itself exhibits an oxygen permeability of 75 cc/m² Day Atm.

Experiments b. through g. show that the thicker SiO₂ layers used by themselves (no SiO underlayer) provide variable oxygen permeability results as compared to Experiment a., i.e., sometimes better, sometimes worse.

The combination of SiO and SiO₂ layers, however, as shown in experiments h., j., and k. provides better barrier properties than demonstrated by either the SiO or SiO₂ layers used separately, with a more than 200% improvement over the best results exhibited by the SiO₂ layers used by themselves (on PET film).

Experiment i. demonstrates that thicker SiO and thinner SiO₂ layers may be used in the combination but at sacrifice in economy because of the greater cost of SiO as compared to SiO₂ and color. The multilayer film structures of experiments h., j., and k. are transparent and colorless as are the film structures of experiments a. through g., while the film structure of experiment i. exhibits yellow coloration.

### Example 2

A multilayer film structure of a layer of 31 nm thickness of SiO on the PET film used in Example 1 and a layer of 202 nm thickness of SiO₂ on the SiO layer was prepared in the same manner as Example 1 and the resultant colorless barrier film was subjected to retorting by placement in a bath of water in an autoclave at 125° C for 30 minutes. The OTR of this film, while unchanged in visual appearance by the naked eye, was 39.8 cc/m² Day Atm, suggesting that this combination should be used where the film structure would not be subjected to retorting, e.g., for packaging tea, coffee, cereals, and cigars.

### Example 3

This example shows the effect of varying the stoichiometric ratio of oxygen to silicon in the SiO underlayer formed on the PET film. The multilayer structure: PET film/SiO/SiO$_2$, by the procedure of Example 1, using the PET film used in that Example, with the following results:

## Table 2

| Ratio of O:Si | SiO Layer thickness (nm) | SiO$_2$ Layer thickness (nm) | OTR (after retort) (cc/m$^2$ Day Atm) |
|---|---|---|---|
| 1.25:1 | 54 | 283 | 0.9 |
| 1.5:1 | 31 | 240 | >150 |

In the experiments addressed in Table 2, the SiO$_2$ layer was doped with Sn by vacuum deposition by electron beam evaporation of a 95/5 weight source mixture of SiO$_2$ and Sn. The SiO layer was formed to contain the greater proportion of oxygen as indicated in Table 2 by mixing SiO and SiO$_2$ together in the weight ratio indicated to form a single source (target). The permeability testing was carried out after retorting of the film structure by the procedure described in Example 2. From these results it can be seen that as the oxygen ratio increases in the SiO underlayer, the retortability of the multilayer structure decreases.

Example 4

This Example shows the effect of SiO layer thickness on barrier properties for PET film/SiO/SiO$_2$ multilayer film structure by the procedure of Example 1, using the PET film used in that Example, with the following results:

## Table 3

| SiO layer thickness nm | SiO$_2$ layer thickness | OTR (after retort) (cc/m2 Day Atm) |
|---|---|---|
| 2 | 238 | 81.0 |
| 5 | 241 | 84.9 |

The SiO$_2$ layer in this Example was doped with 5% Sn in the same manner as reported for Table 2 and the oxygen permeability was determined after the film structure had been retorted as described in Example 2. This retorting virtually destroyed the barrier property of the film structure whereas for the thicker SiO layer used in the first experiment of Table 2, excellent barrier property was exhibited after retorting even though the SiO layer was somewhat diluted by its 1.25:1 O2 to Si ratio.

Example 5

In this layer, the film structure PET film/13 nm SiO/308 nm SiO$_2$ + 5% Cu was prepared and tested for oxygen permeability by the same procedure as Example 1, but after retorting by the procedure of Example 2, and the resultant OTR was 2.8 cc/m$^2$ Day Atm indicating that a moderately thin SiO layer serves to provide reasonably good barrier property in combination with the SiO$_2$ layer.

Example 6

A 49 nm thick layer of SiO was formed onto a 92 gauge (0.0234 mm) "Mylar D" PET film by electron beam evaporation in a vacuum chamber as described in Example 1. The deposit was transparent and exhibited a yellow color which was barely perceptible. A second layer, 250 nm thick of SiO$_2$ mixed with 5%

MgF$_2$ dopant (as the source in the hearth of the electron beam evaporator), was formed on top of the SiO layer by electron beam evaporation. The resultant barrier film was transparent, clear and colorless. This coated film was then retorted by placing it into a bath of water in an autoclave at 125°C for 30 minutes. The retorted film's oxygen transmission rate (OTR) was 1.04 cc/m$^2$ Day Atm, and the film retained the transparent, clear, and colorless appearance present in the unretorted film.

For comparison purposes, SiO$_2$ was mixed with 5% MgF$_2$. This mixture was loaded in the hearth as the source of an electron beam evaporator. A film of approximately 301 nm was formed directly onto a 92 gauge "Mylar D" PET film (on the side without the slip nodule additive) by electron beam evaporation from this mixture. The deposit was transparent and clear. This coated film was then retorted by placing it into a bath of water in an autoclave at 125°C for 30 minutes. The retorted film's oxygen transmission rate (OTR) was measured as 94 cc/m$^2$ Day Atm which was even greater than the barrier quality of the of "MYLAR" base film without the SiO$_2$ layer. Furthermore, instead of being a clear film, the SiO$_2$ layer while still transparent, exhibited a great amount of crazing or many small cracks. Repetition of the experiment to obtain a SiO$_2$ layer 301 nm thick but without the MgF$_2$ dopant gave similarly poor barrier property, except that the SiO$_2$ layer had good adhesion to the PET film as indicated by high peel strength (152 g/cm), and was transparent and colorless, without any cracks or crazing being visible to the naked eye.

### Example 7

A 50 nm film of SiO was deposited onto a 92 gauge "Mylar® D" PET film (on the side without the slip additive) by electron beam evaporation. The deposit was transparent. A second layer, 252 nm of SiO$_2$ mixed with 5% Sn dopant (in the hearth of the electron beam evaporator), was deposited on top of the SiO layer by electron beam evaporation. The film remained transparent and clear after this second deposit. This coated film was then retorted by placing it into a bath of water in an autoclave at 125°C for 30 minutes. The retorted film's oxygen transmission rate (OTR) was measured as 0.65 cc/m$^2$ Day Atm and the film retained its transparency and clarity.

For comparison purposes, SiO$_2$ was mixed with 5% of Sn. This mixture was loaded in the hearth of an electron beam evaporator. A film of approximately 296 nm was formed onto a 92-gauge "Mylar D" PET film (on the side without the slip additive) by electron beam evaporation from this mixture. The deposit was transparent and clear. This coated film was then retorted by placing it into a bath of water in an autoclave at 125°C for 30 minutes. The retorted film's oxygen transmission rate (OTR) was measured as 97 cc/m$^2$ Day Atm, which was greater than the barrier property of the base film by itself. Furthermore, instead of being a clear film, the glass deposit exhibited a great amount of crazing or many small cracks.

### Example 8

Following the procedure of the first paragraph of Example 7, except that the SiO layer was 31 nm thick and the SiO$_2$ layer contained 5% Cu (hearth composition) and was 273 nm thick, gave an oxygen transmission rate after retorting of 3.078 cc/m$^2$ Day Atm. Increasing the thickness of the SiO layer to 51 nm and decreasing the SiO/Cu layer to 250 nm increased the oxygen transmission rate to 6.624 cc/m$^2$ Day Atm.

### Example 9

In this Example, the resin substrate was a polyester film of poly(ethylene-2,6-naphthalene dicarboxylate) (PEN) which had a rough surface characterized by visible ripples present in the film surface. A barrier film was formed by the vacuum deposition procedure of Example 1 with an SiO underlayer 50 nm thick on the PEN film and SiO$_2$ top layer containing 5% Sn (hearth composition) and measuring 125 nm thick on the SiO underlayer. The OTR of the film prior to retorting was 1.6 cc/m$^2$ Day Atm and after retorting was 12.5 cc 2/m$^2$ Day Atm. The OTR of the PEN film by itself was 23 cc/m$^2$ Day Atm.

### Example 10

A number of barrier films of the structure PET film/SiO/SiO$_2$ were formed by vacuum deposition by the procedure of Example 1, in which the PET film was Mylar® D and the SiO$_2$ layer contained various dopants (hearth compositions reported), and on which OTR values were obtained either before or after retorting in accordance with Example 2. The results are shown in Table 4.

## TABLE 4

### LANDSCAPED

### AD5861.TBL

| | SiO layer thickness (nm) | SiO$_2$ Layer thickness (nm) | dopant (wt %) | OTR before retort (cc/m$^2$-day-atm) | OTR after retort (cc/m$^2$-day-atm) |
|---|---|---|---|---|---|
| (a) | 32 | 270 | 10 Cr | 0.93 | - |
| (b) | 35 | 280 | 10 Cr | - | 1.33 |
| (c) | 30 | 217 | 10 Fe | 7.49 | - |
| (d) | 330 | 272 | 10 Fe | - | 6.59 |
| (e) | 57 | 254 | 5 In | 0.42 | - |
| (f) | 50 | 252 | 5 In | - | 5.84 |
| (g) | 30 | 273 | 5 Mn | - | 3.27 |
| (h) | 31 | 273 | 10 Mn | - | 47.8 |
| (i) | 51 | 250 | 5PbO | - | 4.37 |
| (j) | 26 | 278 | 5 SnO$_2$ | 1.07 | - |
| (k) | 29 | 277 | 5 Zr | 5.07 | - |
| (l) | 26 | 279 | 20 Zr | 0.74 | - |
| (m) | 25 | 279 | 5ZrO | 0.50 | - |

For experiment k., the PbO was supplied in the form of a fused glass designated SF-6 available from Schott Glass Technologies, Inc., Duryea, PA, and contained a small proportion of SiO$_2$.

Comparison of experiments a. with b. and c. with d. show stabilizing effect of the dopants in the amounts used on oxygen permeability before and after retorting. The element In was less effective in the amount used, but the result after retorting was still more than 10 times better than the PET film by itself.

Mn as the dopant in experiment g. produced a barrier film with a useful oxygen impermeability after retorting, while the OTR value for experiment h. suggests that too much Mn was present in the SiO$_2$ layer.

Experiments j. through m. all gave barrier layers with useful oxygen impermeabilities.

Example 11

In this Example, the SiO underlayer was replaced by an SiO$_2$ layer to yield the following multilayer film structure: PET film/32 nm SiO$_2$/271 nm SiO$_2$ + 5% Cu (hearth compositions). The PET film was Mylar D. The vacuum deposition procedure of Example 1 was used and the retort procedure of Example 2 was used. The OTR of this structure after retorting was 92.5 cc/m$^2$ Day Atm. The structure was clear and transparent, giving no visual evidence that the oxygen barrier had failed. In addition, the SiO$_2$ layers were strongly adhered to the PET film as indicated by a peel strength of 144.5 g/cm exhibited by a nearly identical film structure.

Example 12

This Example shows the high transparency and low water vapor transmission of a number of multilayer structures of the present invention prepared by the procedure of Example 1 using the PET film of that Example as the resin substrate, details of these structures and light transmissions being reported in Table 5 (light transmission) and Table 6 (water vapor transmission).

## Table 5

### Visible Light Transmission

| SiO Layer thickness(nm) | SiO₂ Layer thickness(nm) | dopant(wt%) | % Light Transmission 400 nm | 550 nm |
|---|---|---|---|---|
| 24 | 271 | 5 Cu | 72.06 | 88.24 |
| 25 | 125 | 5 Sn | 77.61 | 87.36 |
| 50 | 252 | 5 Sn | 77.33 | 78.28 |
| 32 | 270 | 10 Cr | 77.74 | 89.85 |
| 30 | 272 | 10 Fe | 69.02 | 77.16 |
| 57 | 254 | 5 In | 75.60 | 88.47 |
| 30 | 273 | 5 Mn | 73.66 | 80.17 |

These light transmissions compare favorably with the light transmission of the PET film used as the resin substrate, which by itself exhibited light transmissions of 85.89% (400 nm) and 91.73% (550 nm) and especially favorably with the light transmissions of PET commodity packaging film, viz, 69.22% (400 nm) and 78.01% (550 nm). The transmission of the Sn, Fe, and Mn containing structures were measured after retorting by the procedure of Example 2.

## Table 6

### Water Vapor Transmission

| SiO Layer thickness(nm) | SiO₂ Layer thickness(nm) | dopant(wt%) | Water Vapor Transmission (g/m2 from 90% rel.hum. to 50% rel.hum. |
|---|---|---|---|
| 32 | 272 | 5 Cu | 0.93 |
| 10 | 300 | 5 Cu | 2.48 |
| 27 | 277 | 5 Sn | 1.40 |
| 31 | 273 | 5 Cu | 1.24* |
| 36 | 281 | 5 Sn | 1.24* |
| 49 | 250 | 5 MgF | 0.78* |

\* WVTR after retorting

EXAMPLE 13

An optical device as the ones described earlier is constructed in a pattern similar to the one shown in Figure 12, which includes two single waveguides and one 1X4 splitter. The optical waveguide device contains one base or waveguide layer having a nominal thickness of 7.5 micrometers, on which the waveguide pattern is formed as already explained. The nominal width of the wave guide is 7.5 micrometers at the input, and 6 micrometers internal to the Y splitters, as shown in Figure 12. A nominal forming exposure of 20 millijoules/sq.cm. is used. The waveguide layer has the composition shown on Table 7. The device has also two inner buffer layers, one on each side of the waveguide layer, having a nominal thickness of 26 micrometers each. The composition of the inner buffer layers is shown in Table 8. In the outside of the inner buffer layers, two outer buffer layers are also formed having a nominal thickness of 28 micrometers each. Their composition is shown in Table 9.

Both straight waveguides and the 1X4 splitter patterns are tested by taking power measurements with UDT Ge detector (United Detector Technology, Boston, MA) and model S380 power meter. The waveguide output is imaged on the detector with a Nikon Flour 100 mag oil lens with 1.3 NA (Model Ph4DL). Measurements regarding power loss are taken at 1300 nm and 1550 nm wavelengths using light sources from Lasertron QLM 1300SM501 and QLM 1550SM501 launched from an AT&T single-mode fiber.

After completion of the initial optical performance measurements, the samples are coated on one side initially with SiO having a nominal thickness of 30 nanometers and then with $SiO_2$ containing 5% Cu, and having a nominal thickness of 300 nanometers. The other side is coated exactly the same way, except that the Cu is replaced by Sn. The aforedescribed electron beam vacuum apparatus is used, wherein the sample is taped near the edges on a glass slide, and the glass slide is taped on a rotating drum having a nominal diameter of 13 cm.

The sample is then retested, using the same conditions and apparatus for optical characterization noted above. No measurable degradation in the process of applying the evaporated glass coating is detected.

A drop of water is then placed on one of the surfaces of the sample for 16 hours. The sample is again retested, using the same conditions and apparatus for optical characterization noted above. No measurable degradation is detected.

A drop of water is then placed on the other surface of the sample for 16 hours. The sample is once again retested, using the same conditions and apparatus for optical characterization noted above. No measurable degradation is detected.

A nominal loss of power due to the different types of losses before and after the conditions described above is of the order of 0.5 db per centimeter. If a drop of water is placed however without the device having previously been coated as described above, the power loss increases considerably, and a nominal loss value of 0.8 db is received. In addition, observation of the near-field mode structure obtained by imaging the output of the waveguide on an infrared camera and displaying it on a video screen demonstrates no signs of background noise or changes from the previous measurements when the water drop test is used, if the coatings of this invention are present. The impact of water placed on similar, but uncoated samples is that the near-field image is progressively surrounded by increasing levels of scattered light as & result of water being diffused into the sample.

Finally, the results received regarding water permeation through the coatings on polyethylene terephthalate using the different embodiments of this invention, reflect the quality of barrier on an optical waveguide device also. The lower the permeation rate of the coating on the polyethylene terephthalate film, the better the barrier properties of the coating on the optical waveguide device.

For the following tables, the following definitions apply:

o-Cl-HABI    1,1'-Biimidazole, 2,2'-bis[o-
              chlorophenyl]-4,4',5,5'-tetraphenyl-;
              CAS 1707-68-2

MMT          4-Methyl-4H-1,2,4-triazole-3-thiol;
              CAS 24854-43-1

Photomer 4039    Phenol ethoxylate monoacrylate;
                  CAS 56641-05-5;
                  Henkel Process Chemical Co.

Sartomer 349    Ethoxylated bisphenol A diacrylate;
                 CAS 24447-78-7;
                 Sartomer Company, West Chester, PA

CAB          Cellulose acetate butyrate

DEAW         2,5-Bis([4-(diethylamino)-
              phenyl]methylene) cyclopentanone

TDMA         Triethylene glycol dimethacrylate

BHT          Butylated hydroxy toluene

Polyox       Surfactant
WSRN-3000    (Union Carbide Corp.)

### TABLE 7

#### Waveguide Layer

|                  | % by wt. |
|------------------|----------|
| Polyox WSRN-3000 | 1.00     |
| CAB 531-1        | 55.41    |
| Photomer 4039    | 34.94    |
| Sartomer 349     | 4.99     |
| MMT              | 1.90     |
| o-Cl HABI        | 1.00     |
| DEAW             | 0.55     |
| BHT              | 0.01     |
| 3M FC-430        | 0.20     |

## TABLE 8

### Inner Buffer Layer

|  | % by wt. |
|---|---|
| Polyox WSRN-3000 | 45.00 |
| CAB 531-1 | 55.92 |
| Photomer 4039 | 23.45 |
| Sartomer 349 | 10.20 |
| o-Cl HABI | 0.97 |
| Ethyl Michler's Ketone | 0.49 |
| Benzophenone | 2.91 |
| TDMA | 5.10 |

## TABLE 9

### Outer Buffer Layer

|  | % by wt. |
|---|---|
| CAB 381-20 | 45.50 |
| Photomer 4039 | 20.00 |
| Sartomer 349 | 8.50 |
| TDMA | 20.00 |
| MMT | 1.50 |
| o-Cl HABI | 1.00 |
| Ethyl Michler's ketone | 0.48 |
| Benzophenone | 3.02 |

Examples demonstrating the operation of the instant invention have been given for illustration purposes only, and should not be construed as restricting the scope or limits of this invention in any way.

## Claims

1. A multilayer polymer waveguide device structure comprising a deposited layer of SiO of about 10 to 75 nm thickness on said substrate, and a vacuum deposited layer of $SiO_2$ of at least about 20 nm thickness on said SiO layer.

2. The multilayer structure of Claim 1 wherein the thickness of said SiO layer is about 10 to 50 nm and the thickness of said $SiO_2$ layer is about 50 to 350 nm.

3. The multilayer structure of Claim 1 wherein said SiO layer contains up to about $SiO_2$, and the atomic ratio of oxygen to silicon in said layer is not greater than about 1.4 based on the total weight of said layer.

4. The multilayer structure of Claim 1 wherein said $SiO_2$ layer contains an effective amount of dopant to improve its barrier properties upon retorting of said multilayer structure.

5. The multilayer structure of Claim 4 wherein said dopant is a metallic material selected from the group consisting of Ti, Zr, Zn, Al, In, Pb, W, Cu, Sn, Cr, Fe, Mn, Sb, Co, Ba, and Mg, and mixtures thereof, and the amount thereof present in said $SiO_2$ layer is about 0.5 to 30% based on the total weight of the layer.

6.  The multilayer sturcture of Claim 1 and additionally a protective plastic layer on said $SiO_2$ layer.

7.  The multilayer structure of Claim 1 having an oxygen transmission rate (OTR) of less than about 7 $cc/m^2Day$ Atm, preferably less than about 3 $cc/m^2$ Day Atm.

8.  The multilayer structure of Claim 7 wherein said oxygen transmission rate is present both before and after retorting.

9.  The multilayer structure of Claim 1 wherein said resin substrate is a film having a surface roughness of less than about 50 nm and preferably of no greater than about 10 nm.

10. The multilayer structure of Claim 1 in the form of a film or of a container.

11. A process for forming a barrier protecting a polymer waveguide device structure comprising vacuum depositing a layer of SiO of about 10 to 75 nm thickness on said container and vacuum depositing a layer of $SiO_2$ of about 20 to 500 nm thickness on said SiO layer, the resultant multilayer structure having an oxygen transmission rate (OTR) of less than about 7 $cc/m^2Day$ Atm.

12. The process of Claim 11 wherein metal dopant is vacuum deposited along with the vacuum deposition of said layer of $SiO_2$ so that said metal dopant is incorporated in said $SiO_2$ in effective amount to provide said OTR after retorting of said structure.

13. The process of Claim 11 wherein said resin substrate is in the form of a film or of a container.

**Fig. 1**

**Fig. 2a**

TRANSLATIONAL
MECHANISM

Fig. 2b

9
TRANSLATIONAL
MECHANISM

8'

12
13
4
11'
12
7'
12
11'

Fig. 2c

8"
LIGHT

12'
13"
7'''
13'
7"
12'

Fig. 3

Fig. 4

**Fig. 5**

**Fig. 6**

**Fig. 7**

**Fig. 8**

Fig. 9

HEAT

17

14

1

18

21

Fig. 10

14

1

18

*Fig. 11*

HEAT

7

14

1

18

# FIG.12

30

32

7.5μm

6μm

50mm ROC

50mm ROC

30

2mm (STRAIGHT)

1mm (TAPER)

2mm (STRAIGHT)

7066.65μm (CURVE)

2mm (STRAIGHT)

4998.44μm (CURVE)

2mm (STRAIGHT)

1mm (TAPER)

2mm (STRAIGHT)

EP 0 452 973 A2